(19) Europäisches Patentamt
European Patent Office
Office européen des brevets

(11) **EP 4 261 747 A1**

(12) **DEMANDE DE BREVET EUROPEEN**

(43) Date de publication:
**18.10.2023 Bulletin 2023/42**

(21) Numéro de dépôt: **22305553.4**

(22) Date de dépôt: **14.04.2022**

(51) Classification Internationale des Brevets (IPC):
**G06N 3/063** *(2023.01)* **G06N 3/08** *(2023.01)*

(52) Classification Coopérative des Brevets (CPC):
**G06N 3/063;** G06N 3/082

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(71) Demandeurs:
• **BULL SAS**
**78340 Les Clayes-Sous-Bois (FR)**
• **Institute National Polytechnique de Toulouse**
**B.P. 34 038**
**31029 Toulouse Cedex 4 (FR)**
• **UNIVERSITE PAUL SABATIER TOULOUSE III**
**31062 Toulouse Cedex 9 (FR)**

• **Centre national de la recherche scientifique**
**75016 Paris (FR)**

(72) Inventeurs:
• **PRALET, Stéphane**
**38880 Autrans (FR)**
• **BEUZEVILLE, Théo**
**31400 Toulouse (FR)**
• **BUTTARI, Alfredo**
**31500 Toulouse (FR)**
• **GRATTON, Serge**
**31400 Toulouse (FR)**

(74) Mandataire: **IPAZ**
**Bâtiment Platon**
**Parc Les Algorithmes**
**91190 Saint-Aubin (FR)**

(54) **PROCÉDÉ, PROGRAMME D'ORDINATEUR ET DISPOSITIF DE QUANTIFICATION D'UN RÉSEAU DE NEURONES PROFOND**

(57) L'invention concerne un procédé (300) de quantification d'un réseau de neurones profond, RNP, comprenant plusieurs couches, préalablement entrainé lors d'une phase d'entrainement déterminant pour chaque couche dudit réseau de neurones profond un jeu de poids, ledit procédé (300) comprenant une phase (210) de quantification dudit réseau de neurones profond comprenant les étapes suivantes :

-détermination (214), pour au moins une couche dudit réseau de neurones profond entrainé, d'une valeur limite de perturbation ($\Delta A_i$) d'au moins un poids du jeu de poids de ladite couche, au-delà de laquelle la sortie dudit réseau neurones profond est erronée,

-détermination (302) pour une précision d'inférence cible, dudit réseau de neurones, et à partir de ladite valeur limite de perturbation ($\Delta A_i$), d'une valeur limite d'ajustement ($\delta A_i$) d'au moins un poids dudit jeu de poids, et

-diminution (216) d'une précision arithmétique d'au moins un poids dudit jeu de poids en fonction de ladite valeur limite d'ajustement ($\Delta A_i$ ; $\delta A_i$).

Elle concerne également un programme d'ordinateur et un dispositif mettant en œuvre un tel procédé, ainsi qu'un réseau de neurones profond obtenu par un tel procédé.

FIG. 3

**Description**

La présente invention concerne un procédé de quantification d'un réseau de neurones profond. Elle concerne également un programme d'ordinateur et un dispositif mettant en œuvre un tel procédé, ainsi qu'un réseau de neurones profond obtenu par un tel procédé.

Le domaine de l'invention est de manière générale le domaine de la quantification d'un réseau de neurones profond en vue de diminuer le coût d'inférence dudit réseau de neurones.

**État de la technique**

La mise au point puis l'utilisation d'un réseau neuronal se fait généralement en plusieurs phases. Une première phase, dite phase d'entrainement, a pour but d'entrainer le réseau de neurones sur une base de jeux d'entrainement : cette phase d'entrainement requière une puissance de calcul, un temps et une quantité de données d'entrainement importants. Une seconde phase, dite phase d'utilisation ou phase d'inférence, permet d'appliquer à la volée de multiple fois le réseau neuronal entrainé sur un flux de données. Cette phase d'utilisation peut avoir lieu sur des appareils avec des ressources de calcul limitées, tels que des infrastructures Edge ou des IoT. Ainsi, il est important que le réseau neuronal entrainé présente un coût d'inférence, en ressources de calcul et de temps d'exécution, acceptable par ces appareils.

Il existe des techniques de quantification permettant de réduire le coût d'inférence d'un réseau neuronal. Une solution consiste à diminuer la précision arithmétique des poids du réseau neuronal, par exemple en les passant d'une précision arithmétique FP32 (« single precision floating point »), vers une précision arithmétique FP16 (« half precision floating point ») ou FP8 (« minifloat »), voire une précision arithmétique en nombre entier (INT). Cette solution peut être mise en œuvre pendant la phase d'entrainement ou après la phase d'entrainement.

Cette solution permet de diminuer le coût d'inférence du réseau neuronal mais présente l'inconvénient de diminuer drastiquement sa performance d'inférence, ou sa robustesse, le rendant parfois inutilisable.

Un but de la présente invention est de remédier à au moins un des inconvénients de l'état de la technique.

Un autre but de l'invention est de proposer une solution d'optimisation du coût d'inférence d'un réseau neuronal profond, tout en limitant la diminution de la performance d'inférence dudit réseau neuronal profond.

**Exposé de l'invention**

L'invention propose d'atteindre au moins l'un des buts précités par un procédé de quantification d'un réseau de neurones profond, RNP, préalablement entrainé lors d'une phase d'entrainement déterminant pour chaque couche dudit réseau de neurones profond un jeu de poids, ledit procédé comprenant une phase de quantification dudit réseau de neurones profond comprenant les étapes suivantes :

- détermination, pour au moins une couche dudit réseau de neurones profond entrainé, d'une valeur limite de perturbation d'au moins un poids du jeu de poids de ladite couche, au-delà de laquelle la sortie dudit réseau neurones profond est erronée,
- détermination, pour une précision d'inférence cible et à partir de ladite valeur limite de perturbation, d'une valeur limite d'ajustement d'au moins un poids dudit jeu de poids, et
- diminution d'une précision arithmétique d'au moins un poids dudit jeu de poids en fonction de ladite valeur limite d'ajustement.

Ainsi, l'invention propose de diminuer la précision arithmétique d'au moins un, et en particulier de plusieurs poids, d'au moins une couche, et en particulier de chaque couche, du réseau de neurones de profond, NLP. Ainsi, le coût d'inférence du NLP est diminué. En effet, la précision arithmétique d'au moins un poids du réseau de neurones étant diminué, son exécution sur un appareil nécessite moins de ressources de calcul, moins de temps de calcul, et moins d'énergie.

L'invention propose de réaliser une quantification du RNP, après que ledit RNP a été entrainé, contrairement à certaines techniques de l'état de l'art qui réalisent une quantification pendant la phase d'entrainement. Comparée à ces techniques, la solution proposée par la présente invention, permet de ne pas perturber la phase d'entrainement du RNP.

De plus, à la différence de certaines techniques de l'état de l'art qui réalisent une quantification uniforme sur tous les poids du RNP, l'invention propose de réaliser une quantification du RNP de manière individuelle pour au moins un poids du RNP, en fonction d'une valeur limite de perturbation et une précision d'inférence cible après quantification. Comparée à ces techniques, la solution proposée par la présente invention permet de réaliser une quantification du RNP avec moins d'impact, voire sans impact, sur la précision d'inférence dudit RNP.

Dans la présente demande, par « quantification » (« quantization » en anglais) d'un RNP on entend une diminution du coût d'inférence dudit RNP en diminuant la précision arithmétique de tout ou partie des poids dudit RNP.

La valeur limite de perturbation d'un poids, ou d'un jeu de poids, correspond à une limite de modification, dudit poids, ou dudit jeu de poids, au-delà de laquelle une erreur sur la sortie du RNP est obtenue.

Le RNP comporte I couches, avec I≥2.

Un jeu de poids associé à une couche du RNP comporte un ou plusieurs poids associé(s) à un neurone, le nombre de poids dépendant du nombre d'entrée(s) dudit neurone. Dans la suite, et sans perte de généralité, le jeu de poids de la couche « i » du RNP peut être noté, $A_i$. Les jeux de poids de deux couches du RNP peuvent comporter un même nombre de poids, ou des nombres différents de poids. Dans la suite, pour éviter des lourdeurs rédactionnelles et sans perte de généralité, on considère que le jeu de poids de chaque couche du RNP comprend un même nombre de poids de sorte que

$$A_i = \{A_{i1}, ..., A_{ik}, ..., A_{iK}\}, \text{ avec } k=1, .., K \text{ avec } K \geq 1.$$

Dans la suite, la valeur d'ajustement peut être notée, sans perte de généralité, $\delta$. Ainsi, la valeur d'ajustement associée à une couche « i » est noté $\delta_i$ et la valeur d'ajustement associé au poids « k » de la couche « i » est notée $\delta_{ik}$.

Suivant des modes de réalisation, la valeur limite de perturbation peut être calculée pour au moins un, et en particulier pour chaque, poids d'au moins un jeu de poids, et en particulier de chaque jeu de poids. Dans ce cas, la valeur limite de perturbation est valable uniquement pour ledit poids.

Suivant des modes de réalisation, la valeur limite de perturbation peut être calculée pour au moins un, et en particulier pour chaque, jeu de poids considéré comme un ensemble, et non pour chaque poids dudit jeu de poids individuellement. Dans ce cas, la valeur limite de perturbation est valable uniquement pour ledit jeu poids de sorte qu'elle est calculée pour l'ensemble des poids dudit jeu de poids. Autrement dit, la valeur limite de perturbation indique la limite de modification pour tous les poids dudit jeu de poids, pour laquelle la sortie du RNP n'est pas modifiée. Dans ce cas, au moins deux poids dudit jeu de poids peuvent être ajustés différemment. Il est aussi possible, par exemple, de n'ajuster qu'une partie des poids dudit jeu de poids. Par exemple, pour la couche « i » du RNP, la valeur limite de perturbation peut être noté $\Delta A_i$, de sorte que :

$$\Delta A_i = \{\Delta A_{i1}, ..., \Delta A_{ik}, ..., \Delta A_{iK}\}$$

Ainsi, un ou plusieurs poids de la couche i peu(ven)t être modifiés, d'une valeur identique, ou différente : tant que l'ensemble des modifications ne dépasse pas $\Delta A_i$ la sortie du RNP ne sera pas modifiée.

Suivant des modes de réalisation, pour au moins une couche, la valeur limite de perturbation $\Delta A_i$ peut être calculée pour la norme du vecteur $A_i$ de sorte que :

$$\Delta A_i = \|\{\Delta A_{i1}, ..., \Delta A_{iK}\}\|$$

Suivant des modes de réalisation, la valeur d'ajustement peut être calculée pour au moins un, et en particulier pour chaque, poids d'au moins un jeu de poids, et en particulier de chaque jeu de poids. Dans ce cas, la valeur limite d'ajustement est valable uniquement pour ledit poids.

Suivant des modes de réalisation, la valeur d'ajustement peut être calculée pour au moins un, et en particulier pour chaque, jeu de poids considéré comme un ensemble, et non pour chaque poids individuellement. Dans ce cas, la valeur d'ajustement est valable uniquement pour ledit jeu poids de sorte qu'elle est calculée pour l'ensemble des poids dudit jeu de poids. Autrement dit, la valeur d'ajustement indique la modification totale pour tous les poids dudit jeu de poids, pour laquelle la sortie du RNP fournit la précision cible. Dans ce cas, au moins deux poids dudit jeu de poids peuvent être ajustés différemment. Il est aussi possible, par exemple, de n'ajuster qu'une partie des poids dudit jeu de poids. Par exemple, sans perte de généralité, pour la couche « i » du RNP, la valeur d'ajustement peut être noté $\delta A_i$, de sorte que :

$$\delta A_i = \{\delta A_{i1}, ..., \delta A_{iK}\}$$

Ainsi, un ou plusieurs poids de la couche « i » peu(ven)t être modifiés, d'une valeur identique ou identique : tant que l'ensemble des modifications ne dépasse pas $\delta A_i$, la précision d'inférence du RNP sera supérieure ou égale à la précision cible.

Suivant des modes de réalisation, pour au moins une couche, la valeur limite d'ajustement $\delta A_i$ peut être calculée pour la norme du vecteur $A_i$ de sorte que :

$$\delta A_i = \|\{\delta A_{i1}, \ldots, \delta A_{ik}\}\|$$

Suivant des modes de réalisation, la valeur limite d'ajustement peut être égale à la valeur limite de perturbation.

Dans le cas où, ces valeurs sont calculées pour une couche « i » du RNP, alors on a $\Delta A_i = \delta A_i$.

Dans ces modes de réalisation, la précision d'inférence du RNP n'est pas affectée par les modifications apportées aux poids du RNP.

Suivant des modes de réalisation non limitatifs, la valeur limite d'ajustement peut être supérieure à la valeur limite de perturbation.

Dans ce cas, la précision d'inférence peut être dégradée mais cela peut permettre de diminuer encore plus le coût d'inférence du RNP avec une précision cible qui reste acceptable.

Suivant des modes de réalisation non limitatifs, la valeur limite d'ajustement peut être déterminée par recherche itérative, par dichotomie, ou tout autre méthode.

Suivant un exemple de réalisation non limitatif, l'étape de détermination de la valeur limite d'ajustement peut comprendre au moins une itération des opérations suivantes :

- pour au moins une, en particulier chaque couche, du réseau de neurones profond, choix d'une valeur d'ajustement candidate supérieure à ladite valeur limite de perturbation,
- modification de la valeur d'au moins un poids de ladite couche de ladite valeur d'ajustement candidate, et
- mesure de la précision d'inférence dudit réseau de neurones profond ainsi modifié sur une base de test ;

lesdites étant réitérées jusqu'à identifier la valeur d'ajustement limite pour laquelle la précision d'inférence mesurée correspond à la précision d'inférence cible.

L'étape de diminution peut comprendre une mise à zéro d'au moins un poids dont la valeur est inférieure à la valeur limite d'ajustement.

Dans le cas où la valeur limite d'ajustement est calculée pour une couche « i », un ou plusieurs poids de la couche peuvent être mis à zéro tant que la valeur totale de ces poids est inférieure à la valeur limite d'ajustement.

Ainsi, chaque poids mis à zéro n'intervient plus lors de la phase d'itération ce qui permet de diminuer d'autant le coût d'inférence totale du RNP.

Alternativement, ou en plus, l'étape de diminution peut comprendre un changement de la précision arithmétique d'au moins un poids vers une précision arithmétique moins précise, par exemple en passant la précision arithmétique dudit poids d'une première précision arithmétique à une deuxième précision arithmétique moins précise.

En effet, lorsque le changement de la précision arithmétique d'un poids implique que la perte de précision est inférieure ou égale à la valeur limite d'ajustement, alors la précision arithmétique du poids peut être changée. Par exemple, la précision arithmétique du poids peut être passée d'une précision FP32, à une précision arithmétique FP16, FP ou même entier. Dans ce cas, le coût d'inférence due à ce poids sera diminué, ce qui diminuera le coût d'inférence.

Alternativement, ou en plus, la phase de quantification peut comprendre une mise à zéro d'au moins un poids dont la valeur est inférieure à la valeur de la précision de calcul, souvent appelé « epsilon machine », de l'appareil sur lequel le RNP est prévu pour être exécuté.

Une telle modification n'a aucune conséquence sur la précision d'inférence qu'il est possible d'avoir pour le RNP sur cet appareil.

La valeur de la précision machine peut être renseignée par un utilisateur, ou lue depuis une base de donnée pour l'appareil ou le type d'appareil, concerné.

Suivant des modes de réalisation, pour au moins une, en particulier chaque, couche, la valeur limite de perturbation peut être identifiée par une technique de backward error appliquée aux poids du réseau de neurones profond.

Une telle technique de recherche de la valeur de limite de perturbation permet de déterminer la valeur limite de perturbation en partant de l'erreur fournie en sorti du RNP, pour déterminer les perturbations limites des poids du RNP.

En effet, en notant Y' et Y les sorties perturbée et non perturbée du RNP comportant I couches, on peut écrire :

$$Y' = f_I((A_I + \Delta A_I)f_{I-1}((A_{I-1} + \Delta A_{I-1}) \ldots (A2 + \Delta A2)f1((A1 + \Delta A1)(x + \Delta x))$$

Avec

- $f_i$ la fonction d'activation de la couche i du RNP,

- A$_i$ le vecteur des poids de la couche i du RNP, et
- ΔA$_i$ la valeur de limite de perturbation de sorte que Y=Y'

En prenant l'hypothèse que les fonctions d'activation sont différentiables, et en prenant une approximation au premier ordre, l'identification des ΔA$_i$ revient à trouver la solution au problème suivant :

$$\min_{\Delta A_i} \sum_{i=1}^{I} \frac{\parallel \Delta A_i \parallel^2}{\parallel A_i \parallel^2}$$

avec la condition que Y-Y'= ΔY =AΔA$_i$ avec :

$$A^T =$$

Ainsi, les ΔA$_i$ correspondront aux valeurs de perturbation des poids de la couche i au-delà desquelles la sortie approximative Y' du RNP sera suffisamment différente de la sortie Y de sorte que la précision d'inférence sera impactée.
Suivant des modes de réalisation, pour au moins une, en particulier chaque, couche, la valeur limite de perturbation peut être identifiée par une technique statistique de BERR.
Par exemple, l'erreur directe (forward error) $\frac{\parallel \Delta Y \parallel}{\parallel Y \parallel}$ est liée par le conditionnement $\kappa$ à l'erreur inverse (backward error) $\frac{\parallel \Delta A_i \parallel}{\parallel A_i \parallel}$ par la formule suivante :

$$\frac{\parallel \Delta Y \parallel}{\parallel Y \parallel} \leqslant \kappa(A_i) \frac{\parallel \Delta A_i \parallel}{\parallel A_i \parallel}.$$

Par exemple, pour un réseau de neurones utilisé pour la régression, une erreur en sortie du réseau $\left(\frac{\parallel \Delta Y \parallel}{\parallel Y \parallel}\right)$ jugée acceptable est fournie, par exemple l'utilisateur. Connaissant le conditionnement du réseau de neurones à partir des formules obtenues par l'approche d'analyse d'erreur inverse, on obtient alors la valeur limite de perturbation compatible avec le niveau d'erreur en sortie.
Suivant des modes de réalisation, le réseau de neurones profond peut être un réseau de neurones profond entrainé pour :

- une classification d'objets dans au moins deux classes ; ou
- une régression d'une donnée d'entrée en vue de fournir une donnée de sortie.

De tels réseaux de neurones profond sont bien connus et il n'est pas nécessaire de les détailler plus ici.
De tels réseaux de neurones peuvent être utilisés pour l'analyse d'image, pour la détection d'objets dans les images, pour le suivi d'un objet cible dans les images, pour le calcul d'une signature d'une image, mais aussi pour d'autres types d'applications telles que la prévision d'une trajectoire, etc.
Selon un autre aspect de l'invention, il est proposé un programme d'ordinateur comprenant des instructions exécutables qui, lorsqu'elles sont exécutées par un appareil informatique, mettent en œuvre toutes les étapes du procédé, selon l'invention, de quantification d'un réseau de neurones profond.
Le programme d'ordinateur peut être en tout langage informatique, tel que par exemple en langage machine, en C, C++, JAVA, Python, etc.
Selon un autre aspect de l'invention, il est proposé un dispositif de quantification d'un réseau de neurones profond comprenant des moyens configurés pour mettre en œuvre toutes les étapes du procédé, selon l'invention, de quantification d'un réseau de neurones profond.
Le dispositif selon l'invention peut être tout type d'appareil tel qu'un serveur, un ordinateur, une tablette, un calculateur, un processeur, une puce informatique, programmé pour mettre en œuvre le procédé selon l'invention, par exemple par le programme d'ordinateur selon l'invention.

Le dispositif peut être une machine physique ou une machine virtuelle.

Le dispositif peut comprendre une combinaison quelconque de moyens matériels et/ou de moyens logiciels.

Selon un autre aspect de la même invention, il est proposé un réseau de neurones profond obtenu par le procédé selon l'invention de quantification d'un réseau de neurones profond.

Un tel réseau de neurones profond peut être un réseau de neurones entrainé pour la classification ou pour la régression.

Un tel réseau de neurones profond peut être entraîné pour, et utilisé, pour, tout type d'application, telle que l'analyse d'image, le suivi d'objet, la reconnaissance vocale, etc. dans tout domaine technique tel que le domaine industriel, le domaine médical, etc.

**Description des figures et modes de réalisation**

D'autres avantages et caractéristiques apparaîtront à l'examen de la description détaillée de modes de réalisation nullement limitatifs, et des dessins annexés sur lesquels :

- les FIGURES 1a et 1b sont des représentations schématiques d'un exemple de réalisation non limitatif d'un réseau de neurones profond ;
- la FIGURE 2 est une représentation schématique d'un exemple de réalisation non limitatif d'un procédé selon l'invention ;
- la FIGURE 3 est une représentation schématique d'un autre exemple de réalisation non limitatif d'un procédé selon l'invention ; et
- la FIGURE 4 est une représentation schématique d'un exemple de réalisation non limitatif d'un dispositif selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

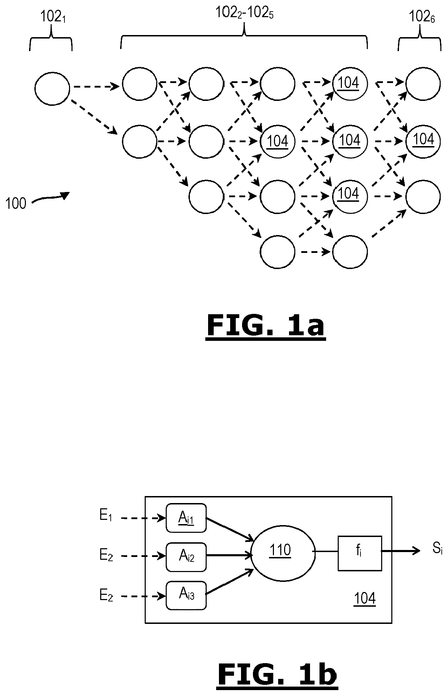

Les FIGURES 1a et 1b sont des représentations schématiques d'un exemple de réalisation non limitatif d'un réseau de neurones profond au sens de la présente invention.

Le réseau de neurones, ou réseau neuronal, 100, représenté sur la FIGURE 1a, comprend 6 couches $102_1$-$102_6$. Chaque couche $102_i$ comprend un ou plusieurs neurones 104. Chaque neurone 104 d'une couche $102_i$ reçoit en entrée un ou plusieurs signaux provenant d'un ou de plusieurs neurones de la couche précédente, sauf pour la première couche $102_i$, et fournit une ou plusieurs sorties vers l'entrée d'un ou plusieurs neurones d'une couche suivante, sauf pour la dernière couche $102_6$.

Dans le réseau de neurones 100, la couche $102_1$ est une couche d'entrée pouvant comprendre un ou plusieurs neurones. Dans l'exemple représenté, la couche d'entrée $102_1$ comprend un seul neurone. Cette couche $102_i$ reçoit la ou les données entrées dans le réseau de neurones 100.

La couche $102_6$ est une couche de décodage 106, également appelée couche de sortie. Dans l'exemple représenté, la couche de sortie $102_6$ comprend, de manière non-limitative, trois neurones. La dernière couche $102_6$ fournit la donnée de sortie du réseau de neurones 100.

Le réseau neuronal 100 comprend en outre plusieurs couches d'encodage, également appelées couches cachées, entre la couche d'entrée $102_1$ et la couche de sortie $102_6$. Dans l'exemple représenté le réseau neuronal 100 comprend quatre couches cachées $102_2$-$102_5$. Chaque couche cachée $102_2$-$102_5$ peut comprendre un même nombre, ou un nombre différent, de neurones. Dans l'exemple représenté, chaque couche cachée $102_2$-$102_5$ comprend 2, 3 ou 4 neurones dans le sens allant de la couche d'entrée $102_1$ vers la couche de sortie $102_6$ du réseau neuronal 100.

Bien entendu cet exemple est donné à titre d'illustration seulement et n'est nullement limitatif.

Dans le réseau neuronal 100 représenté, un neurone d'une couche est relié à un neurone de la couche suivant, sauf pour la couche de sortie $102_6$. En d'autre termes, un neurone d'une couche reçoit la sortie d'un ou plusieurs neurones d'une couche précédente, sauf pour la couche d'entrée $102_1$. Sur la FIGURE 1, toutes les routes possibles entre les neurones 104 sont représentées avec des flèches en pointillées.

La FIGURE 1b est une présentation schématique et nullement limitative d'un neurone 104.

Comme montré, le neurone 104 peut recevoir en entrée, potentiellement la sortie de plusieurs neurones d'une couche précédente, en particulier de trois neurones dans l'exemple représenté.

La sortie de chaque neurone d'une couche précédente reçue en entrée du neurones 104, c'est-à-dire chaque donnée $E_1$-$E_3$, reçue en entrée du neurone 104, est pondérée par un poids. Dans l'exemple représenté, chacune des trois données $E_1$-$E_3$ reçues en entrée du neurone 104 est pondérée par un poids, respectivement $A_{i1}$-$A_{i3}$. Les données pondérées sont ensuite agrégées par une fonction d'agrégation et ensuite entrée dans une fonction d'activation, noté $f_i$. En fonction du résultat retourné par la fonction d'activation $f_i$, le neurone 104 est activé ou non. Si le neurone 104 est activé, elle fournit une donnée Si en sortie et la sortie Si du neurone 104 est ensuite fournie en entrée d'un ou de plusieurs neurones de la couche suivante du réseau de neurones 100.

On comprend que le coût d'inférence du réseau de neurones 110 dépend d'une part du nombre des poids $A_{i1}$-$A_{i3}$ et d'autre part de la précision arithmétique avec laquelle chacun des poids $A_{i1}$-$A_{i3}$ est représenté.

L'invention permet de réaliser une quantification du réseau de neurones 100 en vue de diminuer le coût d'inférence dudit réseau de neurones 100, c'est-à-dire le temps de calcul lors d'une inférence, les ressources informatiques nécessaires pour l'inférence du réseau de neurones 100, ou encore l'énergie consommée par le réseau de neurones 100 lors d'une inférence, et ce, tout en limitant ou évitant une perte de la précision d'inférence.

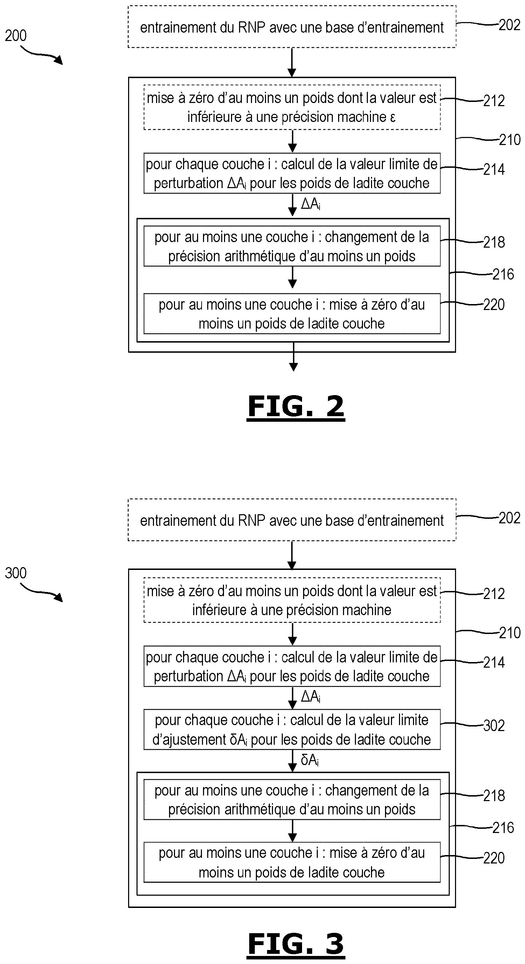

La FIGURE 2 est une représentation schématique d'un exemple de réalisation non limitatif d'un procédé selon la présente invention de quantification d'un réseau de neurones profond, RNP.

Le procédé 200 de la FIGURE 2 peut être utilisé pour réaliser la quantification de tout type de RNP, et en particulier du RNP 100 de la FIGURE 1.

Le RNP est entrainé lors d'une phase 202 d'apprentissage avec une base d'entrainement (non représentée). Cette phase d'entrainement 202 peut faire partie, ou non, du procédé selon l'invention. Dans l'exemple représenté, la phase d'entrainement 202 ne fait pas partie du procédé 200.

Le RNP entrainé est quantifié lors d'une phase 210 de quantification du procédé 200 selon l'invention. Cette phase de quantification 210 a pour but de diminuer le coût d'inférence du RNP entrainé, en diminuant :

- les ressources de calcul consommées pour une inférence du RNP,
- le temps de calcul pour une inférence du RNP, et/ou
- l'énergie électrique consommée pour une inférence du RNP.

Pour ce faire, la phase de quantification 210 peut comprendre optionnellement une étape 212 d'ajustement d'au moins un poids du réseau de neurones en fonction de la précision machine, notée ε, de l'appareil (ou du type d'appareil) sur lequel ledit réseau de neurones sera utilisé, tel qu'une caméra, un ordinateur, une tablette, un Smartphone, etc.

Pour ce faire, l'étape 212 prend en compte la précision machine ε correspondant à la précision de calcul utilisée par l'appareil, ou le type d'appareil. Cette précision ε peut être fournie en tant que donnée d'entrée au procédé 200, ou peut être lue depuis une base de données. Puis, lors de l'étape 212 tous les poids $A_{ik}$ du réseau de neurones profond entrainé dont la valeur est inférieure à la précision machine ε sont mis à zéro. En effet, ces poids ayant une valeur inférieure à la précision machine, leur prise en compte n'a aucun impact lors de l'inférence du réseau de neurones profond sur l'appareil, ou le type d'appareil, exécutant le réseau de neurones lors de la phase d'inférence.

Lors d'une étape 214, une valeur limite de perturbation des poids du réseau de neurones, entrainant un changement de la sortie du réseau de neurones, est calculée. Par exemple, pour un réseau de neurones utilisé pour la classification, la valeur limite de perturbation peut correspondre à la plus petite valeur de perturbation des poids dudit réseau de neurones entraînant un changement de classe, tout en respectant un critère de précision fixé par l'utilisateur. Concernant un réseau de neurones utilisé pour la régression, la valeur limite de perturbation correspond à la plus petite valeur de perturbation des poids dudit réseau de neurones entraînant, au plus, un changement de la valeur fournie pour chaque donnée en entrée du réseau de neurones.

Suivant un exemple de réalisation, la valeur limite de perturbation peut être calculée par couche du réseau de neurones, c'est-à-dire pour tous les poids d'une couche dudit réseau de neurones. Par exemple, on note $A_i$ le vecteur comprenant tous les poids $A_{i1}$-$A_{ik}$ de la couche i, de sorte que

$$A_i = \{A_{i1}, \ldots, A_{ik}, \ldots, A_{iK}\}, \text{ avec } K \geq 1.$$

et $\Delta A_i$ la valeur limite de perturbation totale pour tous les poids de la couche i telle que :

$$\Delta A_i = \sum_{k=1}^{k=K} \Delta A_{ik}$$

Dans ce cas, la valeur limite de perturbation $\Delta A_i$ correspond à une valeur limite totale pour la somme de toutes les perturbations pour l'ensemble des poids de la ième couche du réseau de neurones. Ainsi, l'étape 214 fournit pour chaque couche i une valeur limite de perturbation $\Delta A_i$. Si la perturbation totale apportée aux poids de la couche i est inférieure à $\Delta A_i$ alors la sortie du réseau de neurones profond entrainé n'est pas perturbée de sorte que la précision d'inférence du réseau de neurones profond entrainé n'est pas impactée par ladite perturbation. Dans le cas contraire, la précision d'inférence du RNP entrainé est impactée.

Bien entendu, suivant d'autres modes de réalisation, la valeur limite de perturbation peut être calculée pour chaque poids individuellement ou pour l'ensemble des poids du réseau neuronal.

Lors d'une étape 216, pour chaque couche i, la précision arithmétique des poids de ladite couche est diminuée tout en s'assurant que cette diminution de précision apporte une modification totale des valeurs des poids de ladite couche i inférieure à la limite $\Delta A_i$ calculée pour ladite couche i. Autrement dit, lors de l'étape 216, la modification $\Delta'A_i$ de la précision arithmétique est faite telle que :

$$\sum_{k=1}^{k=K} \Delta'A_{ik} < \Delta A_i$$

Par exemple, l'étape 216 peut comprendre une étape 218 de diminution, pour au moins un des poids $A_{ik}$ de la couche i, un changement de la précision arithmétique avec laquelle ledit poids $A_{ik}$ est représenté, en passant la précision arithmétique dudit poids $A_{ik}$ d'une première précision arithmétique à une deuxième précision arithmétique moins précise. Un tel changement peut être réalisé pour au moins un, en particulier tous les poids de la couche i, tant que ce changement n'entraine pas une modification totale $\Delta'A_i$ des poids de la couche i supérieure ou égale à la valeur limite de perturbation $\Delta A_i$. Par exemple la précision d'au moins un poids peut être passée d'une précision FP32 à une précision FP16, ou d'une précision FP16 à une précision FP8, etc.

Alternativement, ou en plus, l'étape 216 peut comprendre une étape 220 de mise à zéro d'au moins un des poids $A_{ik}$ de la couche i. Une telle mise à zéro peut être réalisée pour un ou plusieurs poids de la couche i, tant que cette mise à zéro n'entraine pas une modification totale des poids de la couche i supérieure ou égale à $\Delta A_i$ calculée pour ladite couche.

Dans l'exemple représenté, l'étape 212 est réalisée avant les étapes 214 et 216. Bien entendu, alternativement, l'étape 212 peut être réalisée après l'étape 216. Suivant encore une autre alternative, l'étape 212 peut être réalisée à la fois avant les étapes 214 et 216, et après les étapes 214 et 216.

La valeur limite de perturbation $\Delta A_i$ peut être identifiée par une technique de backward error appliquée aux poids du RNP entrainé, en partant de l'erreur fournie en sortie du RNP entrainé, pour déterminer les perturbations limites des poids du RNP.

En effet, en notant Y' et Y les sorties perturbée et non perturbée du RNP entrainé comportant I couches, I>2, on peut écrire :

$$Y' = f_I((A_I + \Delta A_I)f_{I-1}((A_{I-1} + \Delta A_{I-1}) \dots (A_2 + \Delta A_2)f_1((A_1 + \Delta A_1)(x + \Delta x))$$

avec

- $f_i$ la fonction d'activation de la couche i du RNP,
- $A_i$ le vecteur des poids de la couche i du RNP, et
- $\Delta A_i$ la valeur de limite de perturbation de sorte que Y=Y'

En prenant l'hypothèse que les fonctions d'activation sont différentiables, et en prenant une approximation au premier ordre, l'identification des $\Delta A_i$ revient à trouver la solution au problème suivant :

$$\min_{\Delta A_i} \sum_{i=1}^{I} \frac{\parallel \Delta A_i \parallel^2}{\parallel A_i \parallel^2}$$

avec la condition que Y-Y'= $\Delta$Y =$A\Delta$A$_i$ avec

$$A^T =$$

Ainsi, les $\Delta$A$_i$ correspondront aux valeurs limites de perturbation des poids de la couche i au delà desquelles la sortie approximative Y' du RNP sera suffisamment différente de la sortie Y de sorte que la précision d'inférence sera impactée.

Alternativement, la valeur limite de perturbation $\Delta$A$_i$ peut être identifiée par une technique statistique de BERR.

Ainsi, le procédé 200 fournit un réseau de neurones profond entrainé est ajusté dont le coût d'inférence est diminué car :

- au moins un de ses poids est mis à zéro, lors de l'étape 212 ou 220, et n'est pas pris en compte lors de la phase d'inférence ; et/ou
- au moins un de ses poids est représenté avec une précision arithmétique diminuée de sorte que sa prise en compte génère un cout d'inférence diminué.

Dans le procédé 200, la quantification du réseau de neurones profond entrainé est réalisée sans impact sur la précision d'inférence dudit réseau de neurones de sorte que la précision d'inférence est conservée. Dans ce cas, la précision d'inférence cible lors de la phase de quantification est la précision d'inférence obtenue suite à l'entrainement du réseau de neurones profond.

Bien entendu, il est possible de réaliser la quantification du réseau de neurones profond entrainé en visant une précision d'inférence cible inférieure à celle obtenue suite à l'entrainement du réseau de neurones.

La FIGURE 3 est une représentation schématique d'un autre exemple de réalisation non limitatif d'un procédé selon la présente invention de quantification d'un réseau de neurones profond, RNP.

Le procédé 300 de la FIGURE 3 peut être utilisé pour réaliser la quantification de tout type de RNP, et en particulier du RNP 100 de la FIGURE 1.

Le procédé 300 de la FIGURE 3 comprend toutes les étapes du procédé 200 de la FIGURE 2.

Le procédé 300 comprend en outre avant l'étape 216, une étape 302 de détermination d'une valeur limite d'ajustement, noté $\delta$A$_i$, pour une précision d'inférence cible. Autrement dit, dans le procédé 216, la modification des poids du RNP entrainé n'est pas réalisée en fonction de la valeur limite de perturbation $\Delta$A$_i$ mais en fonction de la valeur limite d'ajustement $\delta$A$_i$.

Cette valeur limite d'ajustement $\delta$A$_i$ est supérieure à $\Delta$A$_i$ de sorte que la quantification entraine une diminution de la précision d'inférence. Dans ce cas, la précision d'inférence du RNP quantifié est dégradée mais cela peut permettre de diminuer encore plus le coût d'inférence du RNP avec une précision cible qui reste acceptable, pour l'application et l'appareil concernés.

Suivant des modes de réalisation non limitatifs, lors de l'étape 302, la valeur limite d'ajustement peut être déterminée par tâtonnement, par recherche itérative, par dichotomie, ou tout autre méthode. Dans l'exemple représentée, l'étape 302 de détermination de la valeur limite d'ajustement $\delta$A$_i$ comprend une ou plusieurs itérations des opérations suivantes, jusqu'à identifier la valeur limite d'ajustement $\delta$A$_i$ pour laquelle la précision d'inférence mesurée correspond à la précision d'inférence cible :

- pour au moins une, en particulier chaque couche, du réseau de neurones, choix d'une valeur d'ajustement candidate supérieure à ladite valeur limite de perturbation,
- modification de la valeur d'au moins un poids de ladite couche de ladite valeur d'ajustement candidate, et
- mesure de la précision d'inférence dudit réseau de neurones ainsi modifié sur une base de test. Si la précision mesurée est égale à la précision cible, alors la valeur d'ajustement candidate correspond à la valeur d'ajustement limite $\delta$A$_i$ pour cette couche, sinon une nouvelle itération est réalisée avec une nouvelle valeur d'ajustement candidate.

Une fois, la valeur limite d'ajustement $\delta$A$_i$ identifiée pour au moins une, et en particulier chaque, couche du RNP, l'étape 216 est réalisée en prenant en compte ladite valeur $\delta$A$_i$, et non la valeur $\Delta$A$_i$.

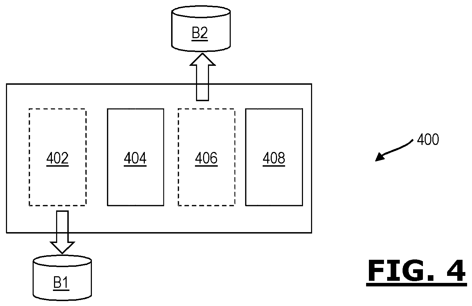

La FIGURE 4 est une représentation schématique d'un exemple de réalisation non limitatif d'un dispositif selon l'invention.

Le dispositif 400 peut être utilisé pour mettre en œuvre un procédé selon l'invention, et en particulier le procédé 200 de la FIGURE 2 ou le procédé 300 de la FIGURE 3.

Le dispositif 400 peut comprendre, de manière optionnelle, un module 402 d'entrainement d'un réseau de neurones profond pour une application donnée, avec une base d'entrainement B1. Le module 402 est par exemple configuré pour mettre en œuvre l'étape 202 décrite plus haut.

Le dispositif 400 comprend un module 404 de détermination d'une perturbation limite pour au moins un poids d'un neurone, ou les poids d'au moins une couche, par exemple $\Delta A_i$, par exemple par une technique de backward error telle que décrite plus haut. Le module 404 est par exemple configuré pour mettre en œuvre l'étape 214 décrite plus haut.

Le dispositif 400 peut comprendre, de manière optionnelle, un module 406 de détermination d'une valeur limite d'ajustement pour au moins un poids d'un neurone, ou les poids d'au moins une couche, par exemple $\delta A_i$, par exemple par dichotomie, en utilisant une base de test B2. Le module 406 est par exemple configuré pour mettre en œuvre l'étape 302 décrite plus haut.

Le dispositif 400 comprend en outre au moins un module 408 de diminution d'une précision arithmétique d'au moins un poids du réseau de neurones profond, en fonction de ladite valeur limite d'ajustement $\delta A_i$, ou de ladite perturbation limite $\Delta A_i$. Le module 408 est par exemple configuré pour mettre en œuvre une combinaison quelconque d'au moins une des étapes 212, 218 et 220 décrites plus haut.

Au moins un des modules 402-408 peut être un module indépendant des autres modules 402-408. Au moins deux des modules 402-408 peuvent être intégrés au sein d'un même module

Chaque module 402-408 peut être un module matériel (hardware) ou un module logiciel (software), tel qu'une application ou un programme d'ordinateur, exécuté par un composant électronique de type processeur, puce électronique, calculateur, etc.

Bien entendu l'invention n'est pas limitée aux exemples qui viennent d'être décrits.

**Revendications**

1. Procédé (200;300) de quantification d'un réseau de neurones profond, RNP, (100) préalablement entrainé lors d'une phase d'entrainement (202) déterminant pour chaque couche ($102_1$-$102_6$) dudit réseau de neurones profond (100) un jeu de poids, ledit procédé (200;300) comprenant une phase (210) de quantification dudit réseau de neurones profond (100) comprenant les étapes suivantes :

   - détermination (214), pour au moins une couche dudit réseau de neurones profond (100) entrainé, d'une valeur limite de perturbation ($\Delta A_i$) d'au moins un poids du jeu de poids de ladite couche, au-delà de laquelle la sortie dudit réseau neurones profond est erronée (100),
   - détermination (214;302) pour une précision d'inférence cible et à partir de ladite valeur limite de perturbation ($\Delta A_i$), d'une valeur limite d'ajustement ($\delta A_i$) d'au moins un poids dudit jeu de poids, et
   - diminution (216) d'une précision arithmétique d'au moins un poids dudit jeu de poids en fonction de ladite valeur limite d'ajustement ($\Delta A_i;\delta A_i$).

2. Procédé (200;300) selon la revendication précédente, **caractérisé en ce que** la valeur limite d'ajustement ($\delta A_i$) est égale à la valeur limite de perturbation ($\Delta A_i$).

3. Procédé (300) selon la revendication précédente, **caractérisé en ce que** la valeur limite d'ajustement ($\delta A_i$) est supérieure à la valeur limite de perturbation ($\Delta A_i$), l'étape (302) de détermination comprenant au moins une itération des opérations suivantes :

   - pour au moins une, en particulier chaque couche, du réseau de neurones profond (100), choix d'une valeur d'ajustement candidate supérieure à ladite valeur limite de perturbation ($\Delta A_i$),
   - modification de la valeur d'au moins un poids de ladite couche de ladite valeur d'ajustement candidate, et
   - mesure de la précision d'inférence dudit réseau de neurones profond (100) ainsi modifié sur une base de test ;

   lesdites opérations étant réitérées jusqu'à identifier la valeur d'ajustement pour laquelle la précision d'inférence mesurée correspond à la précision d'inférence cible.

4. Procédé (200;300) selon l'une quelconque des revendications précédentes, **caractérisé en ce que**, l'étape de diminution (216) comprend une mise à zéro (220) d'au moins un poids dont la valeur est inférieure à la valeur limite d'ajustement.

**5.** Procédé (200;300) selon l'une quelconque des revendications précédentes, **caractérisé en ce que**, l'étape de diminution (216) comprend un changement (216) de la précision arithmétique d'au moins un poids vers une précision arithmétique moins précise.

**6.** Procédé (200;300) selon l'une quelconque des revendications précédentes, **caractérisé en ce que**, pour au moins une, en particulier chaque, couche la valeur limite de perturbation ($\Delta A_i$) est identifiée par une technique de backward error appliquée aux poids du réseau de neurones profond (100).

**7.** Procédé (200;300) selon l'une quelconque des revendications précédentes, **caractérisé en ce que**, pour au moins une, en particulier chaque, couche la valeur limite de perturbation ($\Delta A_i$) est identifiée par une technique statistique de BERR.

**8.** Procédé (200;300) selon l'une quelconque des revendications précédentes, **caractérisé en ce que** le réseau de neurones profond (100) est un réseau de neurones profond entrainé pour :

- une classification d'objets dans au moins deux classes ; ou
- une régression d'une donnée d'entrée en vue de fournir une donnée de sortie.

**9.** Programme d'ordinateur comprenant des instructions exécutables qui, lorsqu'elles sont exécutées par un appareil informatique, mettent en en œuvre toutes les étapes du procédé (200;300) de quantification selon l'une quelconque des revendications précédentes.

**10.** Dispositif (400) de quantification d'un réseau de neurones (100) comprenant des moyens (402-408) configurés pour mettre en œuvre toutes les étapes du procédé (200;300) de quantification selon l'une quelconque des revendications 1 à 8.

**11.** Réseau de neurones profond obtenu par le procédé (200;300) selon l'une quelconque des revendications 1 à 8.

**FIG. 1a**

**FIG. 1b**

200

entrainement du RNP avec une base d'entrainement —202

mise à zéro d'au moins un poids dont la valeur est inférieure à une précision machine ε —212

—210

pour chaque couche i : calcul de la valeur limite de perturbation $\Delta A_i$ pour les poids de ladite couche —214

$\downarrow \Delta A_i$

pour au moins une couche i : changement de la précision arithmétique d'au moins un poids —218

—216

pour au moins une couche i : mise à zéro d'au moins un poids de ladite couche —220

## FIG. 2

300

entrainement du RNP avec une base d'entrainement —202

mise à zéro d'au moins un poids dont la valeur est inférieure à une précision machine —212

—210

pour chaque couche i : calcul de la valeur limite de perturbation $\Delta A_i$ pour les poids de ladite couche —214

$\downarrow \Delta A_i$

pour chaque couche i : calcul de la valeur limite d'ajustement $\delta A_i$ pour les poids de ladite couche —302

$\downarrow \delta A_i$

pour au moins une couche i : changement de la précision arithmétique d'au moins un poids —218

—216

pour au moins une couche i : mise à zéro d'au moins un poids de ladite couche —220

## FIG. 3

FIG. 4

**EP 4 261 747 A1**

Europäisches
Patentamt

European
Patent Office

Office européen
des brevets

# RAPPORT DE RECHERCHE EUROPEENNE

Numéro de la demande

EP 22 30 5553

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Soroosh Khoram ET AL: "Adaptive Quantization of Neural Networks", , 23 février 2018 (2018-02-23), XP055545493, Extrait de l'Internet: URL:https://openreview.net/pdf?id=SyOK1Sg0W [extrait le 2019-01-21] * le document en entier * ----- | 1-11 | INV. G06N3/063 G06N3/08 |
| X | YIREN ZHOU ET AL: "Adaptive Quantization for Deep Neural Network", ARXIV.ORG, CORNELL UNIVERSITY LIBRARY, 201 OLIN LIBRARY CORNELL UNIVERSITY ITHACA, NY 14853, 4 décembre 2017 (2017-12-04), XP080844423, * le document en entier * ----- | 1-11 | |
| A | AL-HAMI MOTAZ ET AL: "Towards a Stable Quantized Convolutional Neural Networks: An Embedded Perspective :", PROCEEDINGS OF THE 10TH INTERNATIONAL CONFERENCE ON AGENTS AND ARTIFICIAL INTELLIGENCE, 1 janvier 2018 (2018-01-01), pages 573-580, XP055959959, DOI: 10.5220/0006651305730580 ISBN: 978-989-7582-75-2 * le document en entier * ----- -/-- | 1-11 | DOMAINES TECHNIQUES RECHERCHES (IPC) G06N |

Le présent rapport a été établi pour toutes les revendications

| Lieu de la recherche | Date d'achèvement de la recherche | Examinateur |
|---|---|---|
| La Haye | 16 septembre 2022 | Moro Pérez, Gonzalo |

EPO FORM 1503 03.82 (P04C02)

page 1 de 2

Europäisches
Patentamt

European
Patent Office

Office européen
des brevets

# RAPPORT DE RECHERCHE EUROPEENNE

Numéro de la demande

EP 22 30 5553

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | ZHU XIAOTIAN ET AL: "Adaptive Layerwise Quantization for Deep Neural Network Compression", 2018 IEEE INTERNATIONAL CONFERENCE ON MULTIMEDIA AND EXPO (ICME), IEEE, 23 juillet 2018 (2018-07-23), pages 1-6, XP033417577, DOI: 10.1109/ICME.2018.8486500 [extrait le 2018-10-08] * le document en entier * ----- | 1-11 | |
| A | AMIR GHOLAMI ET AL: "A Survey of Quantization Methods for Efficient Neural Network Inference", ARXIV.ORG, 21 juin 2021 (2021-06-21), XP081916557, * le document en entier * ----- | 1-11 | |
| | | | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 16 septembre 2022 | Moro Pérez, Gonzalo |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                            

& : membre de la même famille, document correspondant

EPO FORM 1503 03.82 (P04C02)